# EUROPÄISCHE PATENTANMELDUNG

(11) **EP 3 182 340 A1**
(43) Veröffentlichungstag der Anmeldung: **21.06.2017**
(21) Anmeldenummer: 16002407.1
(22) Anmeldetag: 14.11.2016
(51) Int. Cl.: G06Q 10/00, G05B 19/409, H04W 4/18

(54) **VERFAHREN ZUM BETREIBEN EINER VERPACKUNGSANLAGE FÜR TABAKARTIKEL**

(30) Priorität: 16.12.2015 DE 102015016228
(71) Anmelder: Focke & Co. (GmbH & Co. KG), 27283 Verden (DE)
(72) Erfinder: Langnau, Sven, 27321 Thedinghausen (DE)
(74) Vertreter: Aulich, Martin

(57) **Zusammenfassung**

Die Erfindung betrifft ein Verfahren zum Betreiben einer Verpackungsanlage für Produkte, insbesondere Tabakartikel, bei dem ein mobiles Smart-Device (21-23), insbesondere eine AR-Brille, ein Tablet-PC, ein Smartphone oder eine Smart-Watch, drahtlos mit der Verpackungsanlage (10) gekoppelt wird, und bei dem bei gekoppeltem Smart-Device (21-23) die Verpackungsanlage (10) betreffende Informationen in Form von Daten auf das Smart-Device (21-23) übertragen und auf diesem zur Anzeige gebracht werden.

## Beschreibung

Die vorliegende Erfindung betrifft ein Verfahren zum Betreiben einer Verpackungsanlage für Produkte, insbesondere Tabakartikel.

Im Zusammenhang mit dem Betrieb von Verpackungsanlagen für Tabakartikel gibt es oder entstehen diverse Informationen, die für die Maschine betreuenden Personen bzw. Werker von Interesse sind oder sein können. Beispielsweise Istwerte oder eingestellte Sollwerte, wie etwa die Anlagengeschwindigkeit, Temperaturwerte von Heizorganen, Parameter von Servoantrieben und vieles mehr.

Solche Informationen lösen nicht selten Anpassungsbedarf an der Verpackungsanlage aus, insbesondere an bestimmten Steuerungsparametern derselben. Beispielsweise kann es sein, dass ein Werker auf Basis von gemessenen Istwerten an produzierten Produkten die Anlagengeschwindigkeit oder die Geschwindigkeit einzelner bewegbarer Organe anpasst. Es gibt naturgemäß unzählige weitere Beispiele. Auch denkbar ist, dass auf Basis solcher Informationen Wartungen oder Reparaturen an der Anlage vorgenommen werden.

Ausgehend hiervon ist es Aufgabe der vorliegenden Erfindung, das Verfahren der eingangs genannten Art weiterzuentwickeln und für einen Werker insbesondere die Wahrnehmung derartiger Informationen sowie ggf. die Beeinflussung der Verpackungsanlage möglichst komfortabel zu gestalten.

Diese Aufgabe wird gelöst durch ein Verfahren zum Betreiben einer Verpackungsanlage mit den Merkmalen des Anspruchs 1.

Danach wird ein mobiles Smart-Device, insbesondere eine Augmented-Reality-Brille (im Rahmen dieser Anmeldung AR-Brille genannt), ein Tablet-PC, ein Smartphone oder eine Smart-Watch, drahtlos mit der Verpackungsanlage gekoppelt, insbesondere derart, dass Daten bidirektional zwischen Verpackungsanlage und Smart-Device übertragen werden können. Bei gekoppeltem Smart-Device werden dann die Verpackungsanlage betreffende Informationen in Form von Daten auf das Smart-Device übertragen und auf diesem zur Anzeige gebracht.

Die Verwendung von Smart-Devices zu Übertragung von die Verpackungsanlage betreffenden Informationen sowie zur Anzeige derselben ermöglicht einem Werker beispielsweise, den aktuellen Status derselben oder andere wichtige Informationen bequem und kurzfristig abrufen zu können, ohne beispielsweise erst einen fest mit der Anlage verdrahteten PC aufsuchen zu müssen.

Die Informationen können auf dem Smart-Device unter anderem als Bild, auch in 3D-Form, in (schriftlicher) Textform, und/oder in Sprach- oder Tonform zur Anzeige gebracht werden.

Inhaltlich kann es sich bei den die Anlage betreffenden Informationen, die auf dem Smart-Device zur Anzeige gebracht werden, unter anderem um jegliche Art von Betriebsdaten der Verpackungsanlage handeln, beispielsweise um Informationen über den Status der Verpackungsanlage, über Produktionskennwerte, wie etwa die Produktionsleistung, oder auch über den Füllgrad von Materialspeichern.

Die Informationen können unter anderem auch Identifikationscodes von Ersatzteilen für die Verpackungsanlage umfassen.

Besonders vorteilhaft ist es, wenn es sich bei den Informationen um Anweisungen zur Wartung oder zur Reparatur eines oder mehrerer Bauteile der Verpackungsanlage handelt.

Weiter kann vorgesehen sein, dass die Informationen wenigstens eine Abbildung eines für einen Werker ganz oder teilweise nicht sichtbaren Bauteils der Verpackungsanlage umfassen. Insbesondere eines Bauteils, das ganz oder teilweise von einem anderen Bauteil verdeckt ist. Diese Informationen können zudem zusätzlich Hinweise umfassen, die es dem Werker ermöglichen, die Position in der Verpackungsanlage zu finden, an dem das nicht sichtbare Bauteil verbaut ist. Insbesondere in einem Wartungs- oder Reparaturbetrieb der Anlage wären solche Informationen hilfreich.

Auf dem Smart-Device angezeigte Informationen können des Weiteren von mindestens einer an der Verpackungsmaschine angeordneten Kamera aufgenommene Bilder umfassen, insbesondere Echt-Zeit- bzw. Live-Bilder, bevorzugt von einer unterhalb einer Schutzhaube der Verpackungsanlage angeordneten Kamera aufgenommene Bilder. Dies würde eine visuelle Überwachung von ansonsten durch die jeweilige Schutzhaube überdeckten, von außen gegebenenfalls nicht oder nicht gut sichtbaren Aggregaten bzw. Organen der Anlage ermöglichen.

Nicht jedem Werker dürfen oder müssen sämtliche verfügbaren Informationen angezeigt werden. Es kann daher vorgesehen sein, dass einem Werker nur Informationen angezeigt werden, die auch für ihn bestimmt sind. Gemäß einer Weiterbildung der Erfindung ist zu diesem Zweck vorgesehen, dass aus einer Gesamtmenge von für eine Übertragung auf ein Smart-Device vorgesehenen Informationen betreffend die Verpackungsanlage nur diejenige (Teil-)Menge von Informationen übertragen wird, für deren Übertragung der das Smart-Device bedienende Werker eine hierfür vorgesehene Berechtigung besitzt.

Dabei kann vorgesehen sein, dass zunächst eine bestimmte Berechtigungsstufe repräsentierende Daten - Berechtigungsstufendaten - von einem dem Werker zugeordneten Berechtigungsdatenspeicher bevorzugt drahtlos an die Verpackungsanlage übertragen werden. Danach wird nach Übertragung der Berechtigungsstufendaten die dieser Berichtigungsstufe entsprechende (Teil-)Menge an Informationen freigegeben und auf das Smart-Device übertragen.

Bevorzugt ist das Smart-Device eine AR-Brille, die mittels Gestensteuerung bedienbar ist.

Dabei kann vorgesehen sein, dass bei einem Fehler der Verpackungsanlage in dem Sichtfeld eines Werkers, der eine mit der Verpackungsanlage gekoppelte AR-Brille trägt, der Fehler mittels der AR-Brille virtuell visualisiert wird.

Für den Fall, dass der Werker seine Blickrichtung durch die AR-Brille hindurch so auf die Verpackungsanlage richtet, dass der Anlagenbereich, in dem der Fehler aufgetreten ist, innerhalb seines realen Blickfelds liegt, kann vorgesehen sein, dass die virtuelle Visualisierung des Fehlers genau in dem Anlagenbereich erfolgt, in dem der Fehler aufgetreten ist oder auftritt. Die Fehlervisualisierung kann beispielsweise als 3-D-Virtualisierung erfolgen, insbesondere als Hologramm.

Insbesondere kann vorgesehen sein, dass die virtuelle Visualisierung des Fehlers das reale Bild der Anlage in dem Bereich des Fehlers ganz oder teilweise überdeckt.

In weiterer Ausbildung der Erfindung oder als gegebenenfalls auch eigenständig beanspruchbarer Gedanke kann vorgesehen sein, dass mit dem gekoppelten Smart-Device Parameter der Verpackungsanlage - Anlagenparameter - geändert werden können. Beispielsweise, indem ausgelöst durch eine entsprechende Bedienung des Smart-Device durch einen Werker von dem mobilen Smart-Device neue bzw. geänderte Anlagenparameter in Form von Daten zur Verpackungsanlage übermittelt werden.

Die vorgenannte Bedienung des Smart-Device kann unter anderem durch Betätigung eines Touchscreens des Smart-Device oder mittels Spracheingabe oder durch Gestensteuerung erfolgen. Es versteht sich, dass das Smart-Device entsprechend ausgebildet sein muss, um diese Bedienarten umsetzen zu können. Die hierfür notwendigen Techniken sind bekannt.

Es kann auch vorgesehen sein, dass aus einer Gesamtmenge mit einem Smart-Device änderbarer Anlagenparameter der Verpackungsanlage nur diejenige (Teil-)Menge von Anlagenparametern geändert werden kann, für deren Änderung der das Smart-Device bedienende Werker eine hierfür vorgesehene Berechtigung besitzt.

Im Rahmen der Umsetzung des vorgenannten Gedankens kann vorgesehen sein, dass eine bestimmte Berechtigungsstufe repräsentierende Daten - Berechtigungsstufendaten - von einem dem Werker zugeordneten Berechtigungsdatenspeicher bevorzugt drahtlos an die Verpackungsanlage übertragen werden, und dass nach Übertragung der Berechtigungsstufendaten die dieser Berichtigungsstufe entsprechende (Teil-)Menge an Anlagenparametern mit dem Smart-Device geändert werden kann.

Vorzugsweise wird auch für die vorgenannte Parameteränderung als Smart-Device eine AR-Brille eingesetzt, die mittels Gestensteuerung bedienbar ist. Dabei kann vorgesehen sein, dass in dem Sichtfeld eines Werkers, der eine mit der Verpackungsanlage gekoppelte AR-Brille trägt, durch die AR-Brille mindestens ein mittels Gestensteuerung bedienbares Bedienobjekt zur Einstellung mindestens eines Anlagenparameters visualisiert wird, und dass nach Einstellung des mindestens einen Anlagenparameters durch den Werker durch Bedienung des Bedienobjektes der eingestellte (neue) Anlagenparameter(-wert) an die Verpackungsanlage übermittelt wird.
- Fig. 1: eine Draufsicht auf eine Verpackungsanlage für Zigaretten in schematischer Darstellung, nämlich eine aus mehreren Verpackungsmaschinen bestehende Verpackungsanlage,
- Fig. 2: einen Teilausschnitt der Verpackungsanlage aus Fig. 2 zusammen mit einer Karte zur Steuerung der Berechtigung eines Werkers,
- Fig. 3: ein erstes Smart-Device zur Kopplung mit der Verpackungsanlage, nämlich einen Tablet-PC,
- Fig. 4: ein zweites Smart-Device zur Kopplung mit der Verpackungsanlage, nämlich eine Smart-Watch,
- Fig. 5: ein Modul einer Verpackungsanlage, mit dem ein drittes Smart-Device gekoppelt ist, nämlich eine AR-Brille,
- Fig. 6: ein vergrößerter Ausschnitt des Moduls aus Fig. 6, mit virtuellen Bedienobjekten, die mit der AR-Brille in das Sichtfeld eines die AR-Brille tragenden Werkers eingeblendet werden,
- Fig. 7: der Ausschnitt aus Fig. 7 mit virtuellen Anweisungen, die mit der AR-Brille in das Blickfeld des Werkers eingeblendet werden,
- Fig. 8: der Ausschnitt aus Fig. 7 mit anderen eingeblendeten virtuellen Anweisungen für den Werker.

Die Erfindung wird nachfolgend anhand von einer Verpackungsanlage 10 für Tabakartikel exemplarisch erläutert.

Die Verpackungsanlage 10 beinhaltet im gezeigten Ausführungsbeispiel eine gesamte Verpackungslinie von der Herstellung der Zigaretten bis zur Verpackung von Gebindepackungen. Es versteht sich, dass es sich bei einer solchen Verpackungsanlage 10 aber nicht zwangsläufig um eine ganze Verpackungslinie handeln muss.

Eine Verpackungsanlage 10 kann auch lediglich einige wenige oder auch nur eine einzige Verpackungsmaschine oder ein einziges Verpackungsaggregat aufweisen.

Die Erfindung kann im Übrigen nicht nur im Zusammenhang mit der Verpackung von Tabakartikeln, wie Zigaretten, Zigarillos oder dergleichen zum Einsatz kommen, sondern auch bei anderen Produkten, wie beispielsweise Hygieneprodukten.

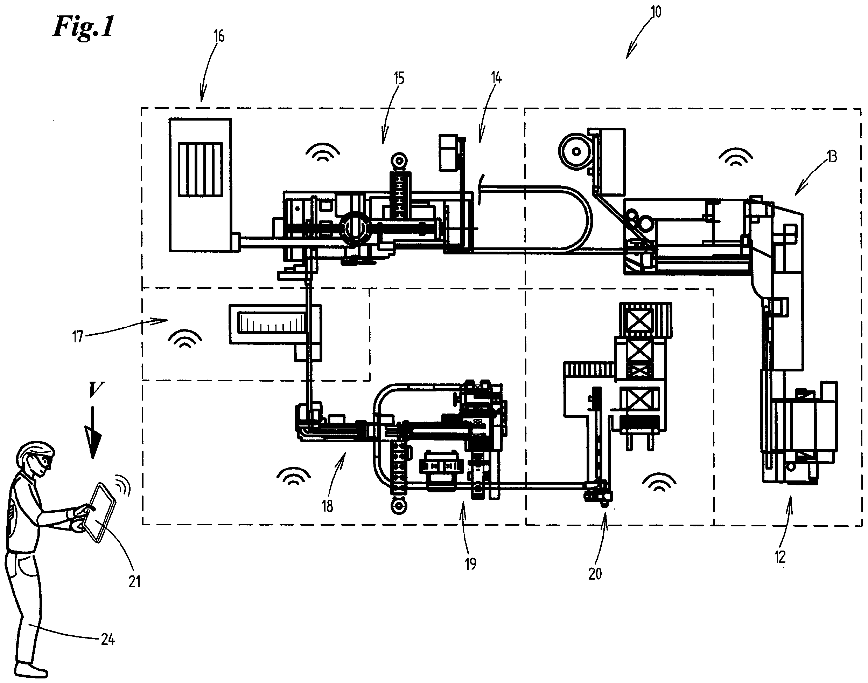

Die Verpackungsanlage 10 gemäß Fig. 1 verfügt über eine Reihe von Verpackungsmaschinen oder Verpackungsaggregaten - im Folgenden zusammenfassend als Verpackungsmaschine bezeichnet -, die das herzustellende Produkt bzw. Zwischenprodukt während der Bearbeitung innerhalb der Verpackungsanlage 10 durchläuft. Jede Verpackungsmaschine wiederum weist eine Reihe von Fertigungseinrichtungen auf. Unter anderem bewegbare Organe, wie Förderer, Siegelorgane, Faltorgane und dergleichen mehr. Bei der Verpackungsanlage 10 folgen exemplarisch folgende Maschinen innerhalb der Verpackungslinie bzw. des Verpackungsprozesses aufeinander:
- Maker 12,
- Filteransetzer 13,
- Zigarettenspeicher 14,
- Hinge-Lid-Packer 15,
- Zuschnittmagazin 16,
- Packungsspeicher 17,
- Cellophaniermaschine 18,
- Stangenpacker 19,
- Kartonpacker 20.

Der grundsätzliche Aufbau einer solchen Anlage und die entsprechenden Fertigungs- bzw. Verpackungsprozesse sind im Stand der Technik bekannt.

Die Maschinen 12-20 der Verpackungsanlage 10 müssen/können von einem Werker bedient, eingerichtet, gewartet und/oder überwacht werden.

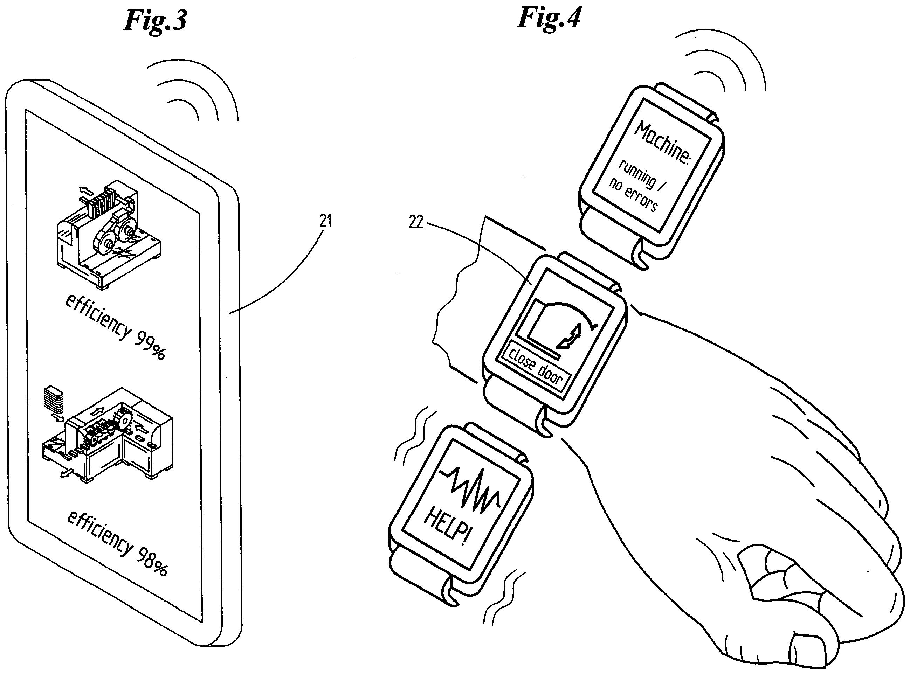

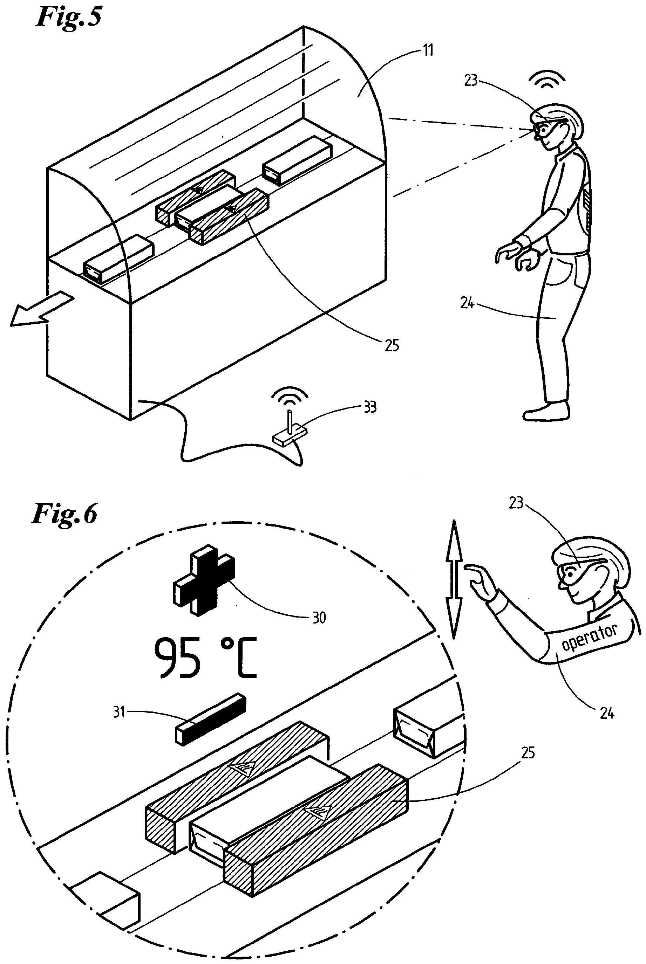

Hierzu kann erfindungsgemäß jeweils mindestens ein Smart-Device eingesetzt werden. Etwa ein Tablet-PC 21 (Fig. 1, 3) eine Smart-Watch 22 (Fig. 4) oder eine AR-Brille 23 (Fig. 5-8), die jeweils mit der Anlage 10 gekoppelt bzw. zur Übertragung von Daten verbunden werden bzw. verbunden werden können. Ein Werker 24 kann das entsprechende Smart-Device 21-23 dann bedienen.

Die Smart-Devices 21-23 werden jeweils drahtlos über eine geeignete Verbindung, insbesondere eine Funkverbindung, an die Anlage 10 angekoppelt. Zu diesem Zweck verfügen die Anlage 10 sowie die Smart-Devices 21-23 jeweils über eine geeignete (Daten-)Schnittstelle. Beispielsweise könnte einer Maschine der Anlage 10 eine Sender- und/oder Empfängereinheit 33 zugeordnet sein, die (ggf. über Funk) drahtlos mit einem Smart-Device 21-23 kommuniziert bzw. über die drahtlos Daten übertragbar sind, vgl. Fig. 5.

Nach Kopplung mit einem der Smart-Devices 21-23 können auf die Smart-Devices 21-23 komfortabel diverse, die Verpackungsanlage 10 betreffende bzw. mit dieser in Zusammenhang stehende Informationen als Daten übertragen und auf diesen zur Anzeige gebracht werden. Beispielsweise diverse Ist- oder Soll-Parameter(-werte) der Verpackungsanlage 10.

Nur beispielhaft sind auf dem in Fig. 3 gezeigten Tablet-PC 21 Wirkungsgrade der Verpackungsanlage 10 oder einzelner Maschinen 12-20 derselben dargestellt, und zwar aktuelle Ist-Wirkungsgrade.

In Fig. 4 ist gezeigt, wie auf der Smart-Watch 22 der aktuelle (fehlerfreie) Ist-Maschinenzustand einer der Maschinen 12-20 der Verpackungsanlage 10 visualisiert ist bzw. alternativ der Status "geöffnet" einer Schutzhaube 11 der Verpackungsanlage 10.

Es können aber auch diverse andere Arten von Betriebsdaten oder sonstigen im Zusammenhang mit der Verpackungsanlage 10 stehenden Informationen auf das Smart-Device 21-23 übertragen und angezeigt werden. Beispielsweise Statusinformationen (fehlerfreier Zustand vs. Fehlerzustand), Maschinenauslastungswerte, Informationen über Füllgrade von einem oder mehreren Materialspeichern, aktuelle Produktionszahlen (beispielsweise die absolute Anzahl bis zum jeweiligen Zeitpunkt produzierter Gutprodukte) etc.

Die Verwendung der AR-Brille 23 ermöglicht die Anzeige von solchen Informationen in besonders hilfreicher Form.

So könnte beispielsweise mit der AR-Brille 23 für den Fall, dass der Werker 24 seinen Blick durch die AR-Brille 23 hindurch auf die Verpackungsanlage 10 richtet, ein Anlagenbereich, in dem ein Fehler auftritt oder aufgetreten ist, virtuell in besonderer Weise visualisiert werden, sodass der Werker 24 durch Überlagerung des realen Bildes der Anlage 10 mit dem eingeblendeten, den Fehler kennzeichnenden virtuellen Bild unmittelbar in der Lage ist, den Ort des Fehlers zu lokalisieren.

Zu diesem Zweck könnte die Verpackungsanlage 10, beispielsweise die Hauptsteuerung der Anlage 10 oder ggf. eine (lokale) Steuerung einer der Maschinen 12-20, den Fehler und insbesondere den Fehlerort erkennen, lokalisieren und einer Übertragungseinrichtung ein mindestens diese Informationen repräsentierendes Signal senden. Auf Basis eines solchen Signals würde die Übertragungseinrichtung dann Informationen drahtlos an die AR-Brille 23 senden, auf Basis derer die AR-Brille 23 das vorgenannte virtuelle Bild zur Kennzeichnung des Fehlers erzeugt.

Im einfachsten Fall ist eine solche Übertragungseinrichtung dabei Teil der Verpackungsanlage 10, die unmittelbar drahtlos über Funk- oder andere Drahtlostechniken Daten an das jeweilige Smart-Device 21-23 übertragen kann.

Denkbar ist aber auch, dass das die vorgenannten Informationen repräsentierende Signal oder gleichartige Signale, auf Basis derer die die Verpackungsanlage 10 betreffenden Informationen später zu der AR-Brille 23 oder zu einem anderen Smart-Device übertragen werden, zunächst über eine Internet-Verbindung unter Nutzung von (Mobil-)Funktechniken oder dergleichen drahtlos an eine entfernt angeordnete Übertragungseinrichtung übermittelt werden. Die entfernt angeordnete Übertragungseinrichtung könnte beispielsweise einem entfernten externen Server oder einer externen Datencloud zugeordnet sein. Die entsprechende Steuerung der Anlage 10 würde demnach zunächst per Datenfernübertragung die vorgenannten Signale an die entfernte Übertragungseinrichtung senden, die dann die die Anlage 10 betreffenden Informationen per (Mobil-)Funk an das Smart-Device überträgt.

Was das vorgenannte virtuelle Bild betrifft, das dem Werker 24 mit der AR-Brille 23 gezeigt wird, so kann dies beispielsweise derart aufbereitet sein, dass es das reale Bild, das der Werker 24 sieht, überlagert. Beispielsweise kann das virtuelle Bild den Fehlerort in dem realen Bild der Verpackungsanlage 10 in besonderer Weise hervorheben, beispielsweise durch Einfärbung des fehlerbehafteten Bereichs der Verpackungsanlage 10 und/oder durch periodisches Blinken des so eingefärbten Bereichs.

Das erzeugte virtuelle Bild kann insbesondere dreidimensional (nach Art eines Hologramms) ausgebildet sein. Für die konkrete Umsetzung einer solchen Visualisierung gibt es natürlich diverse Möglichkeiten, wie der Fachmann erkennt.

Auch eine Hervorhebung bzw. Kennzeichnung von einem oder mehreren Materialspeichern mittels virtueller Bildgestaltung wäre denkbar. So könnte für den Fall, dass eine oder die Steuerung der Anlage 10 einen Nachschubbedarf erkennt bzw. einen Bedarf, einen Materialspeicher aufzufüllen, ein entsprechendes Signals erzeugt werden, das die Übertragungseinrichtung veranlasst, entsprechende Informationen an die AR-Brille 23 zu senden, die dann letztlich zur virtuellen Hervorhebung des betroffenen Materialspeichers im realen Bild der Anlage 10 führen.

Auch im Bereich des Services, insbesondere der Wartung oder der Reparatur einer solchen Verpackungsanlage 10, wäre ein erfindungsgemäßer Einsatz von Smart-Devices hilfreich.

So könnte beispielsweise vorgesehen sein, dass die Verpackungsanlage 10 bzw. eine entsprechende Steuerung derselben erkennt, dass ein bestimmtes Bauteil der Anlage 10 fehlerhaft und austauschwürdig ist. Die Steuerung oder eine andere Auswahleinrichtung der Verpackungsanlage 10 könnte das Bauteil identifizieren, beispielsweise durch Auslesen eines dem Bauteil zugeordneten Bauteilidentifikationscodes. Anhand des ausgelesenen Codes könnte dann die Auswahleinrichtung der Verpackungsanlage 10 aus einem Datenspeicher, in dem Ersatzteilidentifikationscodes verschiedener Ersatzteile gespeichert sind, ein oder mehrere passende Ersatzteilidentifikationscodes auswählen und auf einem der Smart-Devices 21-23 anzeigen.

Es ist auch vorstellbar, mit einer oder mehreren geeignet angeordneten Kameras ganze Bauteile der Verpackungsanlage 10 einzuscannen bzw. deren äußere Gestalt zu erfassen und die Bilder als Daten an die Smart-Devices 21-23 zu übertragen.

Zum Zwecke der Wartung der Verpackungsanlage 10 ist in Ausbildung eines anderen Gedankens vorstellbar, dass die Verpackungsanlage 10 automatisch ermittelt, ob und gegebenenfalls welche Bereiche der Verpackungsmaschine 10 gewartet werden müssen.

Falls eine Wartung erforderlich ist, könnten beispielsweise Anweisungen, die die konkrete Durchführung der Wartung durch einen Werker betreffen, wie etwa einzelne Arbeitsschritte, Demontage/Montage-Anweisungen etc., an das jeweilige Smart-Device 21-23 übertragen werden und auf diesen in geeigneter Form angezeigt werden, beispielsweise in Text- und/oder Bildform.

Im Rahmen der Umsetzung der Gedanken der Erfindung ist auch vorstellbar, dass mit den Smart-Devices 21-23, besonders vorteilhaft mit der AR-Brille 23, für einen Werker 24 von außen unsichtbare bzw. verbaute Teile der Verpackungsanlage 10, geeignet visualisiert werden. Also insbesondere Bauteile, die von anderen Bauteilen überdeckt oder verdeckt werden.

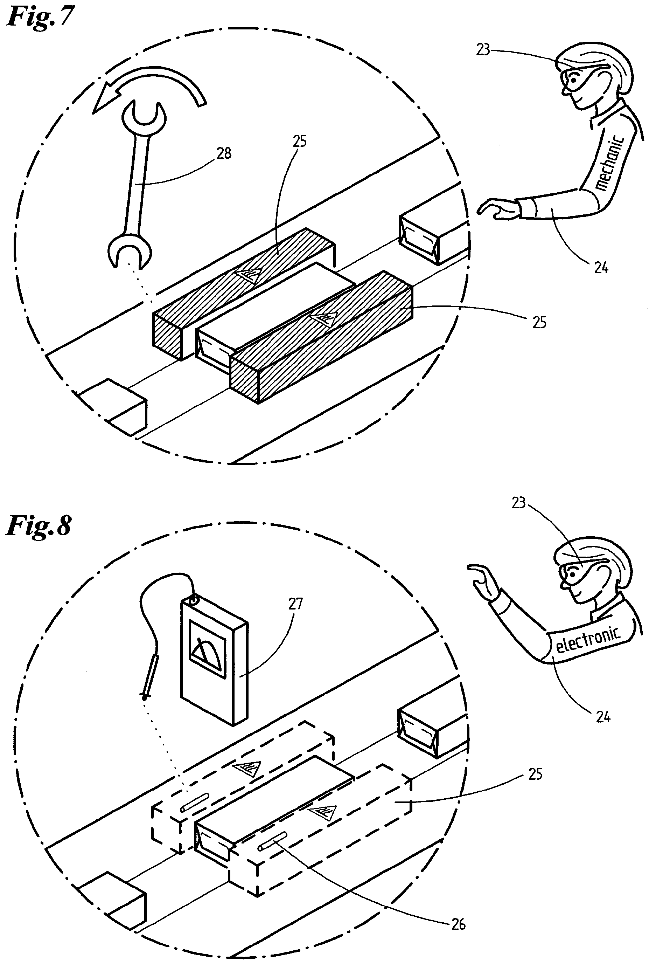

In dem Beispiel der Fig. 8 sind etwa - für einen Werker 24 von außen nicht oder nicht gut sichtbar - im oberen Bereich von Heizbacken bzw. Siegelorganen 25 Temperaturmessorgane bzw. Temperatursensoren 26 angeordnet.

Um dem Werker 24 anzudeuten, an welchen Positionen die Sensoren 26 verbaut sind bzw. an welcher Position der Werker 24 ein eigenes Messgerät, beispielsweise zum Testen der Funktionsfähigkeit der Sensoren 26, ansetzen müsste, werden im Blickfeld des Werkers 24 in der AR-Brille 23 die Heizbacken 25 sowie die Temperatursensoren 26 virtuell hervorgehoben sowie ein virtuellen Messgeräts 27 und eine punktierte Hinweislinie eingeblendet.

In ähnlicher Weise ist, wie in Fig. 9 gezeigt ist, denkbar, dem Werker 24 durch Einblendung eines entsprechenden virtuellen Bildes, etwa eines Schraubenschlüssels 28, anzuzeigen, an welcher Stelle er beispielsweise mit einem Werkzeug anzugreifen hat, wenn er die Heizbacken 25 demontieren möchte.

Mit den Smart-Devices 21-23 können aber nicht nur die Verpackungsanlage 10 betreffende Informationen besonders hilfreich aufbereitet und visualisiert werden, sondern die Anlage 10 kann auch in besonderer Weise bedient werden. So können mit dieser die Verpackungsanlage steuernde Parameter(-werte) eingestellt werden.

In Fig. 6 ist in diesem Zusammenhang beispielsweise gezeigt, dass die Solltemperatur der Heizbacken 25 mittels der AR-Brille 23 eingestellt werden kann. Zu diesem Zweck können dem Werker 24 in der AR-Brille 23 beispielsweise virtuelle Bedienorgane 30, 31 (+ und -) eingeblendet werden, wenn er mit der AR-Brille 23 seinen Blick in Richtung der Heizorgane 25 richtet.

Mittels Gestensteuerung könnte der Werker 24 dann die virtuellen Bedienorgane 30, 31 bedienen, etwa das "+" 30 zur Erhöhung der Temperatur oder das "-" 31 zur Erniedrigung derselben. Anschließend könnte hierdurch ausgelöst der neue Temperatursollwert über die drahtlose Datenverbindung zwischen AR-Brille 23 ggf. unter Verwendung der oben erwähnten Übertragungseinrichtung an die Verpackungsanlage 10 und konkret dort an die zuständige Steuerung übergeben und von dieser als Sollwert zur Steuerung der Heizbacken 25 verwendet werden.

Das vorbeschriebene Anzeigen von die Verpackungsanlage 10 betreffenden Informationen mittels der Smart-Devices 21-23 sowie das Bedienen der Verpackungsanlage 10 mit den Smart-Devices 21-23 werden vorzugsweise automatisch nach Maßgabe von verschiedenen Berechtigungsstufen gesteuert, die mit der Anlage 10 betrauten Werkern zugeordnet sind.

Beispielsweise kann vorgesehen sein, dass einem Werker mit einer ersten Berechtigungsstufe bzw. dessen Smart-Device 21-23 andere Informationen übertragen werden als einem Werker mit einer zweiten Berechtigungsstufe. Auch kann vorgesehen sein, dass ein solcher erster Werker mit seinem Smart-Device 21-23 andere Einstellungen an den Anlagenparametern vornehmen kann als ein solcher zweite Werker.

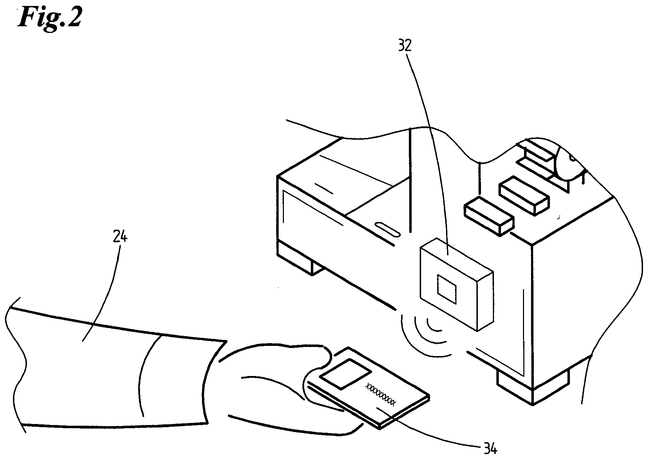

Zu diesem Zweck können beispielsweise eine bestimmte Berechtigungsstufe des jeweiligen Werkers repräsentierende Daten, also Berechtigungsstufendaten, von einem Datenspeicher, vgl. beispielsweise die Chipkarte 34 in Fig. 2, an die Verpackungsanlage 10 bzw. an ein geeignetes Terminal 32 derselben übertragen werden.

Eine geeignete, der Verpackungsanlage zugeordnete Bewertungseinrichtung bewertet dann die übertragenen Berechtigungsdaten und schaltet aus einer insbesondere in einer Datenbank abgelegten Gesamtmenge an Informationen oder Daten, die grundsätzlich für eine Übertragung an ein Smart-Device vorgesehen sind, eine Teilmenge an Informationen frei, die der entsprechenden Berechtigungsstufe des Werkers bzw. den entsprechenden Berechtigungsstufendaten zugeordnet ist. Anschließend überträgt die Übertragungseinrichtung die entsprechenden Informationen/Daten an das Smart-Device 21-23 des Werkers.

Alternativ oder zusätzlich können entsprechende Funktionen auf dem Smart-Device 21-23 und/oder in einer entsprechenden Steuerung der Anlage 10 freigeschaltet werden, die dem Werker eine seiner Berechtigungsstufe entsprechende bzw. zugeordnete Bedienung der Verpackungsanlage 10 bzw. einzelner Maschinen 12-20 erlauben. So kann vorgesehen sein, dass ein erster Werker beispielsweise nur den Hinge-Lid-Packer 15 bedienen kann und auch nur diesen betreffende Informationen an dessen Smart-Device 21-23 übertragen werden, während ein zweiter Werker nur den Kartonpacker 20 bedienen darf und dessen Smart-Device 21-23 nur den Kartonpacker 20 betreffende Informationen übertragen werden. Hier sind sämtliche Berechtigungsstufenkonzepte denkbar.

Gemäß einer weiteren Besonderheit der Erfindung kann auch vorgesehen sein, dass, insbesondere mittels der Smart-Watch 22, der Gesundheitszustand des das Smart-Device 21-23 tragenden Werkers abgefragt wird, vgl. Fig. 4. Beispielsweise könnten dessen Pulse oder andere Vitalparameter gemessen werden.

Diese gemessenen Parameter könnten im weiteren Schritt ausgewertet werden und abhängig von dem Ergebnis könnte dann beispielsweise vorgesehen sein, dass bei Unterschreiten eines bestimmten Gesundheitszustands keine Bedienung der Anlage 10 bzw. einer bestimmten Maschine 12-20 durch den Werker mehr möglich ist. Gegebenenfalls kann auch ein Warnsignal erzeugt werden.

Das erfindungsgemäße Konzept eröffnet diverse Möglichkeiten, wie der Fachmann erkennt.

### Bezugszeichenliste:

- 10: Verpackungsanlage
- 11: Schutzhaube
- 12: Maker
- 13: Filteransetzer
- 14: Zigarettenspeicher
- 15: Hinge-Lid-Packer
- 16: Zuschnittmagazin
- 17: Packungsspeicher
- 18: Cellophaniermaschine
- 19: Stangenpacker
- 20: Kartonpacker
- 21: Tablet-PC
- 22: Smart-Watch
- 23: AR-Brille
- 24: Werker
- 25: Heizbacken
- 26: Temperatursensor
- 27: Messgerät
- 28: Schraubenschlüssel
- 30: Bedienorgan "+"
- 31: Bedienorgan "-"
- 32: Terminal
- 33: Sender-/Empfänger-Einheit
- 34: Chipkarte

## Patentansprüche

1. Verfahren zum Betreiben einer Verpackungsanlage für Produkte, insbesondere Tabakartikel, bei dem ein mobiles Smart-Device (21-23), insbesondere eine AR-Brille, ein Tablet-PC, ein Smartphone oder eine Smart-Watch, drahtlos mit der Verpackungsanlage (10) gekoppelt wird, und bei dem bei gekoppeltem Smart-Device (21-23) die Verpackungsanlage (10) betreffende Informationen in Form von Daten auf das Smart-Device (21-23) übertragen und auf diesem zur Anzeige gebracht werden.

2. Verfahren gemäß Anspruch 1, **dadurch gekennzeichnet, dass** die Informationen Betriebsdaten der Verpackungsanlage (10) umfassen, insbesondere den Status der Verpackungsanlage (10), Produktionskennwerte oder den Füllgrad von Materialspeichern, oder dass die Informationen Identifikationscodes von Ersatzteilen für die Verpackungsanlage (10) umfassen.

3. Verfahren gemäß Anspruch 1 oder 2, **dadurch gekennzeichnet, dass** die Informationen Anweisungen zur Wartung oder zur Reparatur eines oder mehrerer Bauteile der Verpackungsanlage (10) umfassen.

4. Verfahren gemäß einem oder mehreren der vorhergehenden Ansprüche, **dadurch gekennzeichnet, dass** die Informationen wenigstens eine Abbildung eines für einen Werker (24) ganz oder teilweise nicht sichtbaren Bauteiles der Verpackungsanlage (10) umfassen, insbesondere eines Bauteils, dass ganz oder teilweise von einem anderen Bauteil verdeckt ist, und dass die Informationen zusätzlich Hinweise umfassen, die es dem Werker ermöglichen, die Position in der Verpackungsanlage (10) zu finden, an der das nicht sichtbare Bauteil verbaut ist.

5. Verfahren gemäß einem oder mehreren der vorhergehenden Ansprüche, **dadurch gekennzeichnet, dass** die Informationen von mindestens einer an der Verpackungsanlage (10) angeordneten Kamera aufgenommene Bilder umfassen, insbesondere Echt-Zeit- bzw. Live-Bilder, bevorzugt von einer unterhalb einer Schutzhaube der Verpackungsanlage (10) angeordneten Kamera aufgenommene Bilder.

6. Verfahren gemäß einem oder mehreren der vorhergehenden Ansprüche, **dadurch gekennzeichnet, dass** aus einer Gesamtmenge von für eine Übertragung auf ein Smart-Device (21-23) vorgesehenen Informationen betreffend die Verpackungsanlage (10) nur diejenige (Teil-)Menge von Informationen übertragen werden, für deren Übertragung der das Smart-Device (21-23) bedienende Werker (24) eine hierfür vorgesehene Berechtigung besitzt.

7. Verfahren gemäß Anspruch 6, **dadurch gekennzeichnet, dass** eine bestimmte Berechtigungsstufe repräsentierende Daten - Berechtigungsstufendaten - von einem dem Werker (24) zugeordneten Berechtigungsdatenspeicher bevorzugt drahtlos an die Verpackungsanlage (10) übertragen werden, und dass nach Übertragung der Berechtigungsstufendaten die dieser Berichtigungsstufe entsprechende (Teil-)Menge an Informationen auf das Smart-Device (21-23) übertragen werden.

8. Verfahren gemäß einem oder mehreren der vorhergehenden Ansprüche, **dadurch gekennzeichnet, dass** das Smart-Device (21-23) eine AR-Brille ist, die mittels Gestensteuerung bedienbar ist, und dass die Informationen virtuell aufbereitet in das Sichtfeld eines Werkers (24) eingeblendet werden, insbesondere, wenn er seinen Blick auf die Verpackungsanlage (10) richtet.

9. Verfahren gemäß Anspruch 8, **dadurch gekennzeichnet, dass** bei einem Fehler der Verpackungsanlage (10) der Fehler mit der AR-Brille in dem Sichtfeld des Werkers (24) virtuell visualisiert wird, insbesondere, indem der Anlagenbereich, in dem der Fehler auftritt, gegenüber mindestens einem nicht fehlerbehafteten Anlagenbereich visuell hervorgehoben wird.

10. Verfahren gemäß Anspruch 9, **dadurch gekennzeichnet, dass** für den Fall, dass der Werker (24) seine Blickrichtung so auf die Verpackungsanlage (10) richtet, dass der Anlagenbereich, in dem der Fehler aufgetreten ist, innerhalb seines realen Blickfelds liegt, die virtuelle Visualisierung des Fehlers genau in dem Anlagenbereich erfolgt, in dem der Fehler aufgetreten ist oder auftritt, bevorzugt als 3-D-Virtualisierung, insbesondere als Hologramm.

11. Verfahren gemäß Anspruch 10, **dadurch gekennzeichnet, dass** die virtuelle Visualisierung des Fehlers das reale Bild der Anlage (10) in dem Bereich des Fehlers ganz oder teilweise überdeckt.

12. Verfahren gemäß einem oder mehreren der vorhergehenden Ansprüche, **dadurch gekennzeichnet, dass** mit dem gekoppelten Smart-Device (21-23) Parameter der Verpackungsanlage - Anlagenparameter - geändert werden können, insbesondere, indem ausgelöst durch eine Bedienung des Smart-Devices (21-23) durch einen Werker (24) von dem mobilen Smart-Device (21-23) neue Anlagenparameter in Form von Daten zur Verpackungsanlage (10) übermittelt werden.

13. Verfahren gemäß Anspruch 12, **dadurch gekennzeichnet, dass** aus einer Gesamtmenge mit einem Smart-Device (21-23) änderbaren Anlagenparametern der Verpackungsanlage (10) nur diejenige (Teil-)Menge von Anlagenparametern geändert werden kann, für deren Änderung der das Smart-Device (21-23) bedienende Werker (24) eine hierfür vorgesehene Berechtigung besitzt.

14. Verfahren gemäß Anspruch 13, **dadurch gekennzeichnet, dass** eine bestimmte Berechtigungsstufe repräsentierende Daten - Berechtigungsstufendaten - von einem dem Werker (24) zugeordneten Berechtigungsdatenspeicher bevorzugt drahtlos an die Verpackungsanlage (10) übertragen werden, und dass nach Übertragung der Berechtigungsstufendaten die dieser Berichtigungsstufe entsprechende (Teil-)Menge an Anlagenparametern mit dem Smart-Device (21-23) geändert werden kann.

15. Verfahren gemäß einem oder mehreren der vorhergehenden Ansprüche, **dadurch gekennzeichnet, dass** die Bedienung des Smart-Devices (21-23) durch Betätigung eines Touchscreens oder mittels Spracheingabe oder durch Gestensteuerung erfolgt.

16. Verfahren gemäß einem oder mehreren der vorhergehenden Ansprüche, **dadurch gekennzeichnet, dass** das Smart-Device (21-23) eine AR-Brille ist, die mittels Gestensteuerung bedienbar ist, dass in dem Sichtfeld eines Werkers (24), der eine mit der Verpackungsanlage gekoppelte AR-Brille trägt, durch die AR-Brille mindestens ein mittels Gestensteuerung bedienbares Bedienobjekt zur Einstellung mindestens eines Anlagenparameters visualisiert wird, und dass mindestens ein durch den Werker durch Bedienung des Bedienobjektes eingestellter Anlagenparamter an die Verpackungsanlage (10) übermittelt wird.
